# EUROPEAN PATENT SPECIFICATION

(11) **EP 2 904 231 B1**
(45) Date of publication and mention of the grant of the patent: **18.09.2019**
(21) Application number: 13843689.4
(22) Date of filing: 22.02.2013
(51) Int. Cl.: F02C 3/04, F02C 3/14, F02C 7/00, F02C 3/13, F02C 6/08, F02C 9/18, F02K 3/06, F02C 7/18

(54) **GAS TURBINE ENGINE INCLUDING BLEED SYSTEM COUPLED TO UPSTREAM AND DOWNSTREAM LOCATIONS OF COMPRESSOR AND A CORRESPONDING METHOD**
GASTURBINENMOTOR MIT ZAPFLUFTSYSTEM MIT ZAPFLUFTENTNAHMESTELLEN VOR UND NACH DEM VERDICHTER SOWIE ENTSPRECHENDES VERFAHREN
TURBINE À GAZ COMPRENANT UN SYSTÈME DE PRÉLÈVEMENT ACCOUPLÉ AUX EMPLACEMENTS EN AMONT ET EN AVAL DU COMPRESSEUR ET PROCÉDÉ CORRESPONDANT

(30) Priority: 01.10.2012 US 201261708376 P
(43) Date of publication of application: 12.08.2015
(73) Proprietor: United Technologies Corporation, Farmington, CT 06032 (US)
(72) Inventor: RIORDAN, William J., Coventry, Connecticut 06238 (US)
(74) Representative: Dehns
(86) International application number: PCT/US2013/027250
(87) International publication number: WO 2014/055106

(56) References cited:
- EP-A2- 2 213 864
- US-A1- 2008 016 878
- US-A1- 2010 107 594
- US-A1- 2012 167 587
- US-A1- 2012 180 509
- US-A1- 2012 180 509
- US-A1- 2012 216 545
- US-A1- 2012 237 334
- Jayant Sabnis ET AL: "THE PW1000G PURE POWER NEW ENGINE THE PW1000G PURE POWER NEW ENGINE CONCEPT AND ITS IMPACT ON MRO Jayant Sabnis Vice President, System Functional Design Av Week Engine MRO Forum", , 1 December 2010 (2010-12-01), pages 1-45, XP055155486, Av Week engine MRO Forum, Munich, Germany Retrieved from the Internet: URL:http://events.aviationweek.com/html/mr oeng10/Day2 - The PW1000G Pure Power New Engine Concept.SABNIS (P&W).pdf [retrieved on 2014-11-27]

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A speed reduction device such as an epicyclical gear assembly may be utilized to drive the fan section such that the fan section may rotate at a speed different than the turbine section so as to increase the overall propulsive efficiency of the engine. In such engine architectures, a shaft driven by one of the turbine sections provides an input to the epicyclical gear assembly that drives the fan section at a reduced speed such that both the turbine section and the fan section can rotate at closer to optimal speeds.

Air can be bled from the compressor section and used for various purposes, such as for cooling of hot components and for providing conditioned air to an aircraft cabin.

Gas turbine engines of the prior art are disclosed in US 2012/180509 and EP 2 213 864. A gas turbine engine having the features of the preamble of claim 1 is disclosed in US 2012/0216545 A1.

### SUMMARY

In accordance with the invention there is provided a gas turbine engine as set forth in claim 1.

In a further non-limiting embodiment, the heat exchanger is also arranged in receiving communication with a fan air duct and is operable to exchange heat between the fan air duct and the common duct.

In a further non-limiting embodiment of any of the foregoing examples, the common duct continues from the heat exchanger to an aircraft.

The invention also provides a method of providing bleed air from a compressor of a gas turbine engine, as set forth in claim 4.

In a further non-limiting embodiment of any of the foregoing examples, includes selecting the upstream location in response to the engine power level being high and selecting the downstream location in response to the engine power level being low.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an example bleed system on a compressor section of the gas turbine engine of Figure 1.
Figure 3 schematically illustrates a representation of the bleed system of Figure 2.

### DETAILED DESCRIPTION

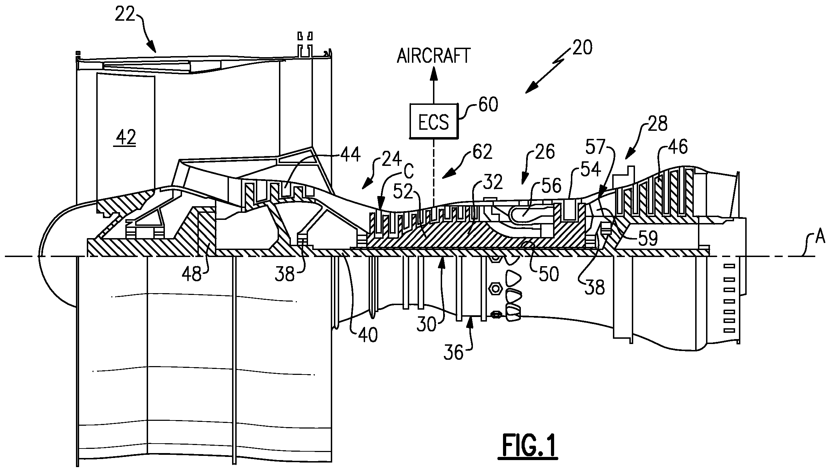

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines, including three-spool architectures and ground-based turbines.

The engine 20 generally includes a first spool 30 and a second spool 32 mounted for rotation about an engine central axis A relative to an engine static structure 36 via several bearing systems 38. It should be understood that various bearing systems 38 at various locations may alternatively or additionally be provided.

The first spool 30 generally includes a first shaft 40 that interconnects a fan 42, a first compressor 44 and a first turbine 46. The first shaft 40 is connected to the fan 42 through a gear assembly of a fan drive gear system 48 to drive the fan 42 at a lower speed than the first spool 30. The second spool 32 includes a second shaft 50 that interconnects a second compressor 52 and second turbine 54. The first spool 30 runs at a relatively lower rotational speed and hence pressure than the second spool 32. It is to be understood that "low pressure" and "high pressure" or variations thereof as used herein are relative terms indicating that the high pressure is greater than the low pressure. An annular combustor 56 is arranged between the second compressor 52 and the second turbine 54. The first shaft 40 and the second shaft 50 are concentric and rotate via bearing systems 38 about the engine central axis A which is collinear with their longitudinal axes.

The core airflow is compressed by the first compressor 44 then the second compressor 52, mixed and burned with fuel in the annular combustor 56, then expanded over the second turbine 54 and first turbine 46. The first turbine 46 and the second turbine 54 rotationally drive, respectively, the first spool 30 and the second spool 32 in response to the expansion.

The engine 20 is a high-bypass geared aircraft engine that has a bypass ratio that is greater than about six (6), with an example embodiment, being greater than ten (10), the gear assembly of the fan drive gear system 48 is an epicyclic gear train, such as a planetary gear system or other gear system, with a gear reduction ratio of greater than about 2.3:1 and the first turbine 46 has a pressure ratio that is greater than about 5. The first turbine 46 pressure ratio is pressure measured prior to inlet of first turbine 46 as related to the pressure at the outlet of the first turbine 46 prior to an exhaust nozzle. The first turbine 46 has a maximum rotor diameter and the fan 42 has a fan diameter such that a ratio of the maximum rotor diameter divided by the fan diameter is less than 0.6. It should be understood, however, that the above parameters are only exemplary.

A significant amount of thrust is provided by the bypass flow due to the high bypass ratio. The fan section 22 of the engine 20 is designed for a particular flight condition -- typically cruise at about 0.8 Mach and about 35,000 feet (10 668m). The flight condition of 0.8 Mach and 35,000 feet (10 668m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. To make an accurate comparison of fuel consumption between engines, fuel consumption is reduced to a common denominator, which is applicable to all types and sizes of turbojets and turbofans. The term is thrust specific fuel consumption, or TSFC. This is an engine's fuel consumption in pounds per hour divided by the net thrust. The result is the amount of fuel required to produce one pound of thrust. The TSFC unit is pounds per hour per pounds of thrust (lb/hr/lb Fn). When it is obvious that the reference is to a turbojet or turbofan engine, TSFC is often simply called specific fuel consumption, or SFC. "Low fan pressure ratio" is the pressure ratio across the fan blade alone, without a Fan Exit Guide Vane system. The low fan pressure ratio as disclosed herein according to one non-limiting embodiment is less than about 1.5. "Low corrected fan tip speed" is the actual fan tip speed in feet per second divided by an industry standard temperature correction of [(Tram °R) / (518.7 °R)]^{0.5}. The "Low corrected fan tip speed" as disclosed herein according to one non-limiting embodiment is less than about 1150 feet per second (360.5m/s).

The engine 20 provides pressurized air to an environmental control system 60 through a bleed system 62 for aircraft cabin pressurization and aircraft wing de-icing. Size constraints of a geared turbofan engine core compartment, such as compartment C, present design challenges in order to meet customer requirements.

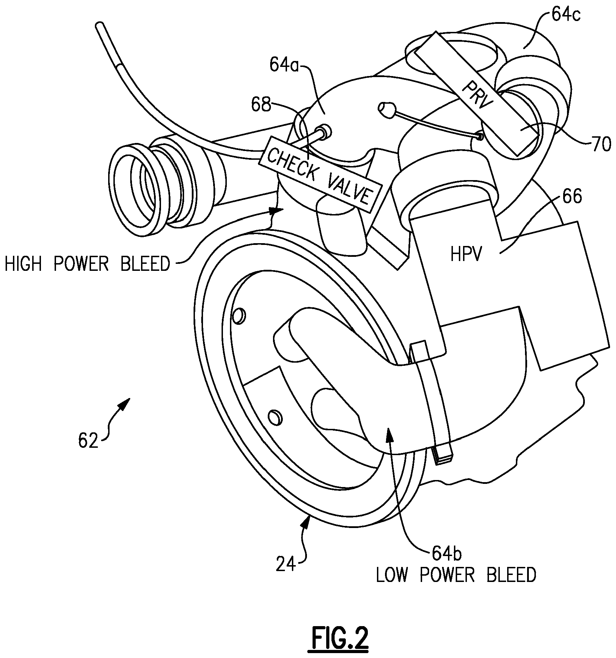

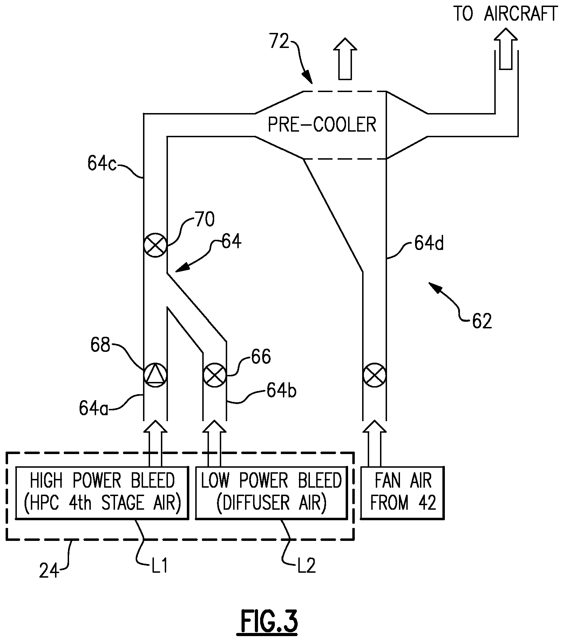

Figure 2 shows a perspective view of the bleed system 62 and Figure 3 shows a schematic view of the bleed system 62. The bleed system 62 is operable to convey pressurized air from the engine 20 to an aircraft on which the engine is used. The system 62 includes ducting 64 to convey pressurized air from the engine 20. In this example, the bleed system 62 includes a first inlet duct 64a connected with a first axial location L1 of the compressor section 24 and a second inlet duct 64b connected with a second, different axial location L2 of the compressor section 24. Different air pressures are provided at the different axial locations L1/L2. As can be appreciated, the bleed system 62 can further include additional inlet ducts at additional axial locations.

In a further example, the first inlet duct 64a is connected at a port at the first axial location L1 with a high pressure stage, and the second inlet duct 64b is connected at a port at the second axial location L2 with a diffuser stage of the compressor section 24. For example, the high pressure compressor stage is the fourth stage. The inlet ducts 64a/64b merge into a common duct 64c that leads to the aircraft.

A flow-control valve 66, known as a high pressure valve (HPV), is located in the second inlet duct 64b and controls which of the inlet ducts 64a/64b are actively providing compressed air in the bleed system 62. For example, at low engine power, the valve 66 opens to allow diffuser stage air into the bleed system 62, as this air is at a sufficient pressure to meet a given system requirement. A check valve 68 in the first inlet duct 64a prevents the diffuser air from flowing into the first axial location L1 of the compressor section 24. At Low power, the upstream pressure at axial location L1 is not sufficient to meet the bleed system requirements, and the flow-control valve 66 in the downstream (higher pressure) duct at axial location L2 opens to allow the higher pressure bleed air to flow into the common duct and to the aircraft. The check valve 68 is in the upstream section and is closed such that the higher pressure air does not flow back into the compressor at the upstream location. At high engine power settings, there is sufficient pressure at the upstream location at axial location L1 and the flow-control valve 66 closes, shutting off the higher pressure location and allowing the upstream location to flow to the aircraft.

Overall pressure in the bleed system 62 is regulated by a pressure regulating valve (PRV) 70 in the common duct 64c. At high engine power, there is sufficient pressure at the first axial location L1 to meet the given system requirement, for example. The flow -control valve 66 shuts, to allow air from the first axial location L1 into the first inlet duct 64a at the high engine power.

A heat exchanger 72 is located downstream of the PRV 70. The heat exchanger 72 serves as a pre-cooler, which receives fan air from the bypass flowpath through fan air duct 64d when needed to cool the bleed air from the compressor section 24 in the ECS 60 before the bleed air flows to the aircraft.

The bleed system 62 allows the engine 20 to provide pressurized air to the aircraft for cabin pressurization/air conditioning as well as aircraft wing de-icing. The bleed system 62 also can meet the unique size, weight, and performance requirements of the engine 20.

## Claims

1. A gas turbine engine (20) comprising:
a fan (42);
a compressor section (24) comprising a first (44) and a second compressor (52);
a combustor (56) in fluid communication with the compressor section (24);
a turbine section (28) comprising a first (46) and a second turbine (54) in fluid communication with the combustor (56);
a first spool (30) including a first shaft (40) that interconnects the fan (42), the first compressor (44) and the first turbine (46);
a second spool (32) including a second shaft (50) that interconnects the second compressor (52) and the second turbine (54);
and further comprising:
a bleed system (62) configured to receive bleed air from the compressor section (24), the bleed system (62) comprising a first inlet duct (64a) configured to receive bleed air from an upstream location (L1) of the compressor section (24), a second inlet duct (64b) configured to receive bleed air from a downstream location (L2) of the compressor section (24) a common duct (64c) into which the first inlet duct (64a) and the second inlet duct (64b) merge and a heat exchanger (72) arranged in receiving communication with the common duct (64c), wherein the second inlet duct (64b) includes a flow-control valve (66) configured to selectively open and close flow from the compressor section (24) through the second inlet duct (64b) and the first inlet duct (64a) includes a check valve (68), and the common duct (64c) includes a pressure-control valve (70); **characterized in that**:
the first shaft (40) is connected to the fan (42) through a gear assembly (48) of a fan drive gear system to drive the fan (42) at lower speed than the first spool (30), the gear assembly (48) being an epicyclic gear train;
the upstream location (L1) is a high pressure compressor stage of the compressor section (24); and
the downstream location (L2) is a diffuser stage of the compressor section (24).

2. The gas turbine engine as recited in claim 1, wherein the heat exchanger (72) is also arranged in receiving communication with a fan air duct (64d) and is operable to exchange heat between the fan air duct (64d) and the common duct (64c).

3. The gas turbine engine as recited in claim 2, wherein the common duct (64c) continues from the heat exchanger (72) to an aircraft.

4. A method of providing bleed air from a compressor (24) of a gas turbine engine (20) as set forth in any preceding claim, the method comprising:
selecting between providing bleed air from an upstream location (L1) of a compressor section (24) of the gas turbine engine (20) and a downstream location (L2) of the compressor section (24) of the gas turbine engine (20) according to an engine power level of the gas turbine engine (20); **characterized in that**:
the upstream location (L1) is a high pressure compressor stage of the compressor section (24); and
the downstream location (L2) is a diffuser stage of the compressor section (24).

5. The method as recited in claim 4, including selecting the upstream location in response to the engine power level being high and selecting the downstream location in response to the engine power level being low.

## Patentansprüche

1. Gasturbinenmotor (20), umfassend:
einen Lüfter (42);
einen Verdichterbereich (24), der einen ersten (44) und einen zweiten Verdichter (52) umfasst;
eine Brennkammer (56) in Fluidverbindung mit dem Verdichterbereich (24);
einen Turbinenbereich (28), der eine erste (46) und eine zweite Turbine (54) in Fluidverbindung mit der Brennkammer (56) umfasst;
eine erste Spule (30), die eine erste Welle (40) beinhaltet, die den Lüfter (42), den ersten Verdichter (44) und die erste Turbine (46) miteinander verbindet;
eine zweite Spule (32), die eine zweite Welle (50) beinhaltet, die den zweiten Verdichter (52) und die zweite Turbine (54) miteinander verbindet;
und ferner umfassend:
ein Zapfluftsystem (62), das dazu konfiguriert ist, Zapfluft von dem Verdichterbereich (24) zu empfangen, wobei das Zapfluftsystem (62) einen ersten Einlasskanal (64a), der dazu konfiguriert ist, Zapfluft von einer stromaufwärts gelegenen Stelle (L1) des Verdichterbereichs (24) zu empfangen, einen zweiten Einlasskanal (64b), der dazu konfiguriert ist, Zapfluft von einer stromabwärts gelegenen Stelle (L2) des Verdichterbereichs (24) zu empfangen, einen gemeinsamen Kanal (64c), in dem der erste Einlasskanal (64a) und der zweite Einlasskanal (64b) zusammenlaufen, und einen Wärmetauscher (72), der in empfangender Kommunikation mit dem gemeinsamen Kanal (64c) angeordnet ist, umfasst, wobei der zweite Einlasskanal (64b) ein Durchflussregelventil (66) beinhaltet, das dazu konfiguriert ist, Durchfluss von dem Verdichterbereich (24) durch den zweiten Einlasskanal (64b) selektiv zu öffnen und zu schließen, und der erste Einlasskanal (64a) ein Rückschlagventil (68) beinhaltet und der gemeinsame Kanal (64c) ein Druckregelventil (70) beinhaltet; **dadurch gekennzeichnet, dass**:
die erste Welle (40) mit dem Lüfter (42) durch eine Getriebebaugruppe (48) eines Lüfterantriebsgetriebesystems verbunden ist, um den Lüfter (42) mit einer geringeren Drehzahl als die erste Spule (30) anzutreiben, wobei die Getriebebaugruppe (48) ein Umlaufgetriebestrang ist;
die stromaufwärts gelegene Stelle (L1) eine Hochdruck-Verdichterstufe des Verdichterbereichs (24) ist; und
die stromabwärts gelegene Stelle (L2) eine Diffusorstufe des Verdichterbereichs (24) ist.

2. Gasturbinenmotor nach Anspruch 1, wobei der Wärmetauscher (72) ebenfalls in empfangender Kommunikation mit einem Lüfter-Luftkanal (64d) angeordnet und funktionsfähig ist, um Wärme zwischen dem Lüfter-Luftkanal (64d) und dem gemeinsamen Kanal (64c) auszutauschen.

3. Gasturbinenmotor nach Anspruch 2, wobei der gemeinsame Kanal (64c) von dem Wärmetauscher (72) weiter zu einem Luftfahrzeug verläuft.

4. Verfahren zum Bereitstellen von Zapfluft von einem Verdichter (24) eines Gasturbinenmotors (20) nach einem der vorstehenden Ansprüche, wobei das Verfahren Folgendes umfasst:
Auswählen zwischen Bereitstellen von Zapfluft von einer stromaufwärts gelegenen Stelle (L1) eines Verdichterbereichs (24) des Gasturbinenmotors (20) und einer stromabwärts gelegenen Stelle (L2) des Verdichterbereichs (24) des Gasturbinenmotors (20) gemäß einem Motorleistungsniveau des Gasturbinenmotors (20); **dadurch gekennzeichnet, dass**:
die stromaufwärts gelegene Stelle (L1) eine Hochdruck-Verdichterstufe des Verdichterbereichs (24) ist; und
die stromabwärts gelegene Stelle (L2) eine Diffusorstufe des Verdichterbereichs (24) ist.

5. Verfahren nach Anspruch 4, das Auswählen der stromaufwärts gelegenen Stelle als Reaktion darauf, dass das Motorleistungsniveau hoch ist, und Auswählen der stromabwärts gelegenen Stelle als Reaktion darauf, dass das Motorleistungsniveau niedrig ist, beinhaltet.

## Revendications

1. Turbine à gaz (20) comprenant :
une soufflante (42) ;
une section (24) à compresseurs comprenant un premier (44) et un second compresseur (52) ;
une chambre de combustion (56) en communication fluidique avec la section (24) à compresseurs ;
une section (28) à turbines comprenant une première (46) et une seconde turbine (54) en communication fluidique avec la chambre de combustion (56) ;
un premier corps (30) comprenant un premier arbre (40) qui relie la soufflante (42), le premier compresseur (44) et la première turbine (46) ;
un second corps (32) comprenant un second arbre (50) qui relie le second compresseur (52) et la seconde turbine (54) ;
et comprenant en outre :
un système de prélèvement (62) configuré pour recevoir de l'air de prélèvement en provenance de la section (24) à compresseurs, le système de prélèvement (62) comprenant un premier conduit d'entrée (64a) configuré pour recevoir de l'air de prélèvement en provenance d'un emplacement en amont (L1) de la section (24) à compresseurs, un second conduit d'entrée (64b) configuré pour recevoir de l'air de prélèvement en provenance d'un emplacement en aval (L2) de la section (24) à compresseurs, un conduit commun (64c) vers lequel convergent le premier conduit d'entrée (64a) et le second conduit d'entrée (64b) et un échangeur de chaleur (72) agencé en communication de réception avec le conduit commun (64c), dans laquelle le second conduit d'entrée (64b) comprend une soupape de régulation du débit (66) configurée pour ouvrir et fermer de manière sélective l'écoulement allant de la section (24) à compresseurs à travers le second conduit d'entrée (64b) et le premier conduit d'entrée (64a) comprend une soupape antiretour (68), et le conduit commun (64c) comprend une soupape de régulation de la pression (70) ;
**caractérisée en ce que** :
le premier arbre (40) est relié à la soufflante (42) par l'intermédiaire d'un ensemble d'engrenages (48) d'un système d'engrenages de commande de soufflante pour commander la soufflante (42) à une vitesse plus faible que le premier corps (30), l'ensemble d'engrenages (48) étant un train d'engrenages planétaires ;
l'emplacement en amont (L1) est un étage compresseur haute pression de la section (24) à compresseurs ; et
l'emplacement en aval (L2) est un étage diffuseur de la section (24) à compresseurs.

2. Turbine à gaz selon la revendication 1, dans laquelle l'échangeur de chaleur (72) est également agencé en communication de réception avec un conduit (64d) d'air de soufflante et sert à l'échange de chaleur entre le conduit (64d) d'air de soufflante et le conduit commun (64c).

3. Turbine à gaz selon la revendication 2, dans laquelle le conduit commun (64c) se poursuit de l'échangeur de chaleur (72) jusqu'à un aéronef.

4. Procédé de fourniture d'air de prélèvement en provenance d'un compresseur (24) d'une turbine à gaz (20) selon une quelconque revendication précédente, le procédé comprenant :
la sélection entre la fourniture d'air de prélèvement en provenance d'un emplacement en amont (L1) d'une section (24) à compresseurs de la turbine à gaz (20) et en provenance d'un emplacement en aval (L2) de la section (24) à compresseurs de la turbine à gaz (20) en fonction d'un niveau de puissance de moteur de la turbine à gaz (20) ; **caractérisé en ce que** :
l'emplacement en amont (L1) est un étage compresseur haute pression de la section (24) à compresseurs ; et
l'emplacement en aval (L2) est un étage diffuseur de la section (24) à compresseurs.

5. Procédé selon la revendication 4, comprenant la sélection de l'emplacement en amont en réponse à un niveau élevé de puissance de moteur et la sélection de l'emplacement en aval en réponse à un niveau faible de puissance de moteur.
